# EUROPEAN PATENT SPECIFICATION

(11) **EP 3 313 166 B1**
(45) Date of publication and mention of the grant of the patent: **05.08.2020**
(21) Application number: 16767351.6
(22) Date of filing: 29.06.2016
(51) Int. Cl.: A01D 46/26, A01D 46/253

(54) **A PORTABLE DEVICE FOR HARVESTING SMALL FRUITS**
TRAGBARE VORRICHTUNG ZUM ERNTEN KLEINER FRÜCHTE
DISPOSITIF PORTABLE POUR CUEILLIR DES PETITS FRUITS

(30) Priority: 29.06.2015 IT UB20151761
(43) Date of publication of application: 02.05.2018
(60) Divisional application: 20159932.1
(73) Proprietor: AI.MA AUTOMAZIONE INDUSTRIALE & MACCHINE AGRICOLE S.R.L., 56040 Cenaia (PI) (IT)
(72) Inventor: BACCI, Massimiliano, I-56040 Cenaia (PI) (IT); TONELLI, Marco, I-56021 Cascina (PI) (IT)
(74) Representative: Celestino, Marco
(86) International application number: PCT/IB2016/053907
(87) International publication number: WO 2017/002047

(56) References cited:
- EP-A2- 2 138 028
- CN-A- 101 663 939
- CN-A- 103 688 670

## Description

### Field of the invention

The present invention relates to a device for harvesting small fruits from a plant. In particular, it relates to a portable device arranged to detach fruits like olives, coffee beans, almonds, pistachio seeds and the like, by causing a vibration or a shaking movement of the branches of the plant.

### Background of the invention

Several devices are known for harvesting small fruits, in particular olives, comprising an elongated support that has an end portion configured to be grasped by an operator and an opposite end portion providing two diverging extensions that have coplanar axis, and are each connected at one end to a respective comb-like element. Each comb-like element consists of a base and an array of fingers that extend on the opposite side with respect to the grasp support. These devices also comprise a motor and a transmission mechanism that is mounted to the support and is configured for causing each comb-like element to perform an alternating rotational movement with respect to the support, within a predefined angle, so that the arrays of fingers, by vibrating among the terminal parts of the branches, shake the latter and cause the fruit to fall.

For instance, in the devices described in EP 2 138 028 A2 and in CN 103 688 670, the two comb-like elements are hinged in substantially central first hinge portions of the support extensions, so that they can move along a same plane. Moreover, each comb-like element has a respective second hinge portion, at a distance from the first hinge portion, at which an end portion of a respective connecting rod of the mechanism of transmission is hinged.

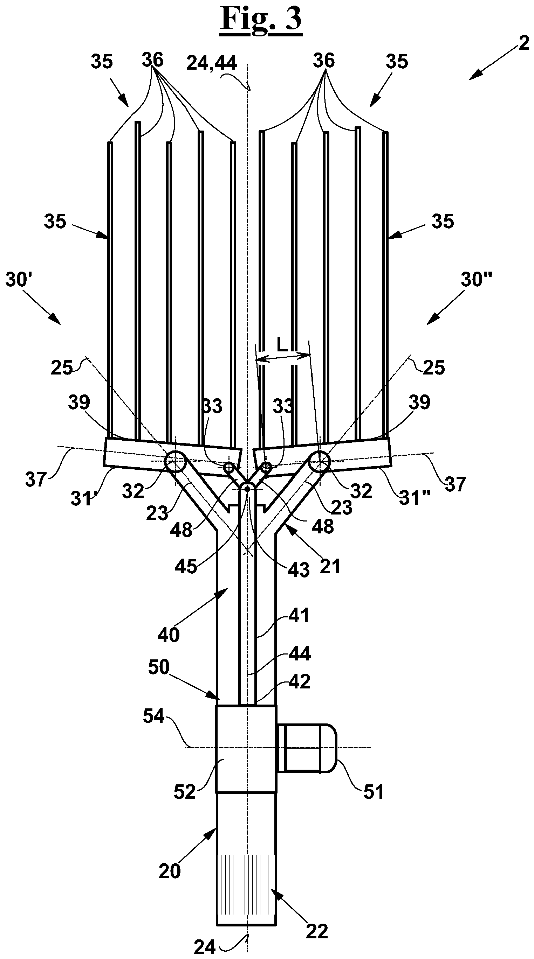

In the device of EP 2 138 028 A2, the motor output shaft is perpendicular to said plane. The other end portion of each connecting rod, opposite to the one that is connected to the comb-like element, is pivotally constrained to a pin arranged in a peripheral portion of a wheel (Fig. 3, part. 17) fitted on the output shaft. The pin, to which the two connecting rods are connected, is therefore normally at a distance from the transmission axis. Moreover, the pin, to which the two connecting rods are connected, performs a rotational movement, since it is a crank pin. This causes the comb-like elements to oscillate symmetrically to each other.

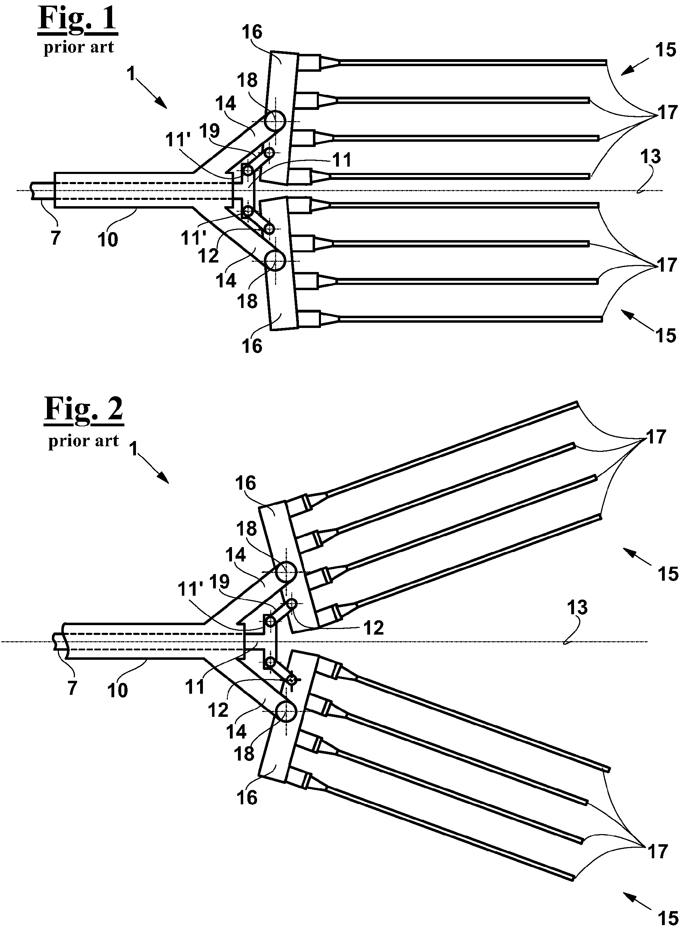

In the device of CN 103 688 670 A, the motor output shaft is parallel to the plane of the comb-like elements. In this case, a similar wheel (Figs. 1 and 2, part. 11) is fitted on the output shaft and is connected to links that move the comb-like elements, through a mechanism sequentially consisting of a pin, a link and a 90° joint (items 12 and 13, respectively).

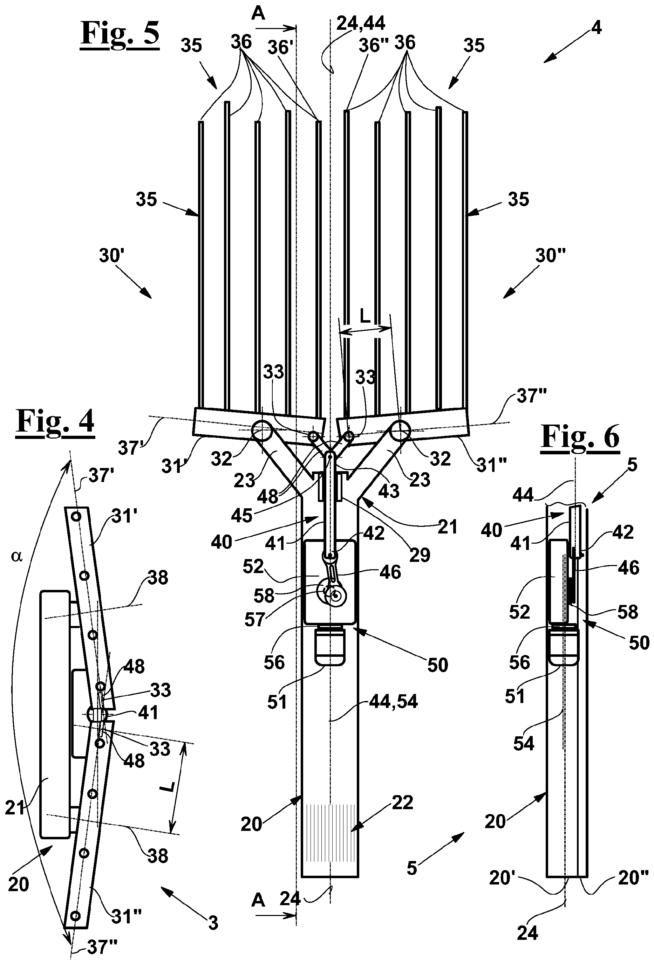

In the device described in CN 101 663 939, the two comb-like elements are arranged in front of each other and are rotatably mounted about a longitudinal axis of the base, forming a sort of beak. The transmission mechanism is configured for causing each comb-like element to perform an alternating rotational movement about its own axis, so as to move the arrays of fingers towards/away from each other, in a closing/opening operation of the beak. One of the two comb-like elements (item 11) is eccentrically connected to the motor output shaft by a longer link (item 9-1, Figs. 3 and 4), while the other comb-like element (item 10) is operated by a shorter link (item 9-2) hinged to an intermediate portion of the longer links. Even in this case, the pin, to which the two links are connected, carries out a rotational movement, which causes the comb-like elements to oscillate symmetrically, in general.

In the above-mentioned devices, the transmission mechanism between the motor output shaft and the comb-like elements comprises only rotating parts such as connecting rods, links, wheels and angle joints.

The fruit harvesting devices must have a casing that contains the transmission mechanism to a maximum possible extent, and preferably also contains the motor, to protect these components against damages when the device is used and displaced, and also to protect the operators. With the transmission mechanisms of the above-described devices, the casing must allow the passage and the movement of some parts of the transmission, typically the two links that move the comb-like elements. Therefore, the casing must have a large passage opening, which also allows dirt and such objects as leaves, twigs, etc., to come inside the casing. This matter can hinder, block or even damage the inner mechanical parts, which requires more frequent cleaning and/or maintenance, thus increasing the fruit harvesting costs.

In another device, described in EP 1943895 A1 and diagrammatically shown in Figs. 1 and 2, each of two "comb-like elements" 15 comprises an elongated base 16 and a plurality of fingers 17 that extend from a same side of base 16. Each base 16 is hinged at an own central portion 18 to an end portion of a "V"-shaped couple of diverging extensions 14 extending from an elongated support 10, which is configured to be grasped by an operator. The device also comprises a transmission stem 7 reciprocating within support 10, and having a "T"-shaped end portion 11 protruding between extensions 14. The free end 11' of each lateral branch of the "T" is hinged to an end portion of a link 19. The opposite end 12 of each link 19 is also hinged to respective base 16, at a lever distance from a central portion 18 of the base, and is hinged to a respective extension 14 of the support. Bases 16 are arranged symmetrically in a plane passing through the axis 13 of the device and orthogonal to bases 16, and move symmetrically along this plane, along with fingers 17 of two comb-like elements 16, in a movement that is also symmetrical with respect to a symmetry plane.

Such devices as the one of EP 1943895 A1 have some drawbacks that should be overcome. Firstly, the comb-like elements of these devices are generally so wide that they cannot easily be displaced among the branches of the plants, which complicates their use in the case of thick-branched trees and shrubs. Moreover, when shaking the plant, the fingers of the two comb-like elements are arranged at a reduced distance from one another, which could damage or even cut leaves and twigs. Moreover, such devices are somewhat uncomfortable to be transported and used, due both to the size of the various mechanical components, and to some bodies arranged asymmetrically with respect to the support, in particular, the motor or the gearmotor, which are normally mounted orthogonal with respect to the elongated support or the casing of the device.

It is also desirable to improve the shaking efficiency of the prior art devices, i.e. the amount of harvested fruits, and also simplify their structure, and improve their ease of maintenance.

### Summary of the invention

It is therefore a feature of the invention to provide a portable device for harvesting small fruits from a plant, by causing a vibration or a shaking movement of the end portion of the branches, which provides a harvesting efficiency higher than the prior art devices, so as to reduce labour and working times.

It is also a feature of the present invention to provide such a device in which the motor and the transmission parts can be protected from dirt and foreign matter more effectively than in the prior art devices.

It is then a feature of the invention to provide such a device that can move among the branches more easily than the prior art devices.

It is also a feature of the invention to provide such a device that can shake the branches enough to cause the fruits to fall, while interacting more gently with the branches and the leaves than the prior art devices.

It is another feature of the invention to provide such a device that can be transported and used by an operator more easily and more comfortably than the prior art devices, in particular, a device that one can more easily handle to treat a relatively high plant while standing on the ground.

These and other objects are achieved by a portable device for harvesting small fruits from plants by causing a vibration or a shaking movement, comprising:
- an elongated support configured to be grasped by an operator and having a longitudinal axis and an enlarged end portion that is widened with respect to the longitudinal axis;
- two comb-like elements, each comprising:
   - respective elongated base members extending along respective base directions;
   - respective arrays of fingers that extend from the respective elongated base members on a same side, opposite to the elongated support, with respect to said respective elongated base members,
   wherein each of the two comb-like elements has a first hinge portion that is pivotally connected to the enlarged end portion, and a second hinge portion that is arranged at a lever distance from the first hinge portion;
- an actuation unit configured for actuating an alternating rotational movement of the comb-like elements with respect to the enlarged end portion of the support about the respective first hinge portions, wherein the actuation unit is mounted to the elongated support;
- a movement transmission mechanism between the actuation unit and the two comb-like elements, comprising two links, each pivotally connected to the second hinge portion of a respective comb-like element of the two comb-like elements,
the main feature of which is that the transmission mechanism comprises:
- a transmission stem comprising:
   - a first end portion connected to said actuation unit;
   - a second end portion, opposite to said first end portion, connected to a pin arranged at said second end portion of said transmission stem,
   the transmission stem connected to a first end of each of the two links by the pin,
   so that said second end portion, through both said links, causes said comb-like elements to rotate about said first hinge portion alternately between an open configuration and a closed configuration,
- a slide seat for the transmission stem, the slide seat arranged to force the transmission stem to perform an alternated translational movement along the longitudinal axis of the elongated support,
   the transmission stem configured for reciprocating along a transmission axis which is aligned with the longitudinal axis,
and that the pin, which is integral to the stem for both the links, is arranged on the transmission axis of the transmission stem.

The reciprocating movement of the transmission allows a symmetric rotation movement of the two comb-like elements, i.e. a rotation movement in which both the comb-like elements are approaching or moving away from each other. Such a symmetrical movement of the comb-like elements allows a higher fruit harvesting yield, since the twigs bearing the fruit pieces hit one another at a very high frequency. Instead, in EP 2 138 028 A2 and in CN 103 688 670, since a reciprocating stem is not present, and the links connection are directly connected to a crank point, the comb-like elements rotate most of the time in the same direction, and this twig-collision technical effect is not obtained. Moreover, unlike EP 2 138 028 A2 and CN 103 688 670, in which the links can come into contact with the plants and the fruit pieces, in the present invention the pin integral to the reciprocating stem allows keeping the motor and the transmission parts completely separate from dirt and foreign matter, which means a longer lasting tightness and cleanness.

Moreover, a same pin integral to the reciprocating stem for both the links allows arranging the two bases, and therefore the two comb-like elements, at a minimum distance from each other, with respect to such prior art devices as the one described in EP 1 943 895 A1. Besides a minimum overall lateral encumbrance of the device, the closer arrangement of the comb-like elements allows the device to penetrate more easily through the branches of the plants being harvested, which makes it possible to extend the field of application of the device.

The first and/or the second hinge portions are preferably made on the elongated base.

Advantageously, the two comb-like elements are arranged in such a way that the alternating rotational movement of the two comb-like elements is a movement along a plane, in other words each point integral to one of such comb-like elements moves along a circle arc belonging to a plane, during the alternating rotational movement.

In an advantageous exemplary embodiment, a pair of innermost fingers, each arranged at a distance from the longitudinal axis shorter than any distinct finger of a respective comb-like element, are mounted skew to each other, so as to keep a mutual distance longer than a predetermined minimum distance when the comb-like elements are at about the closed configuration.

In fact, during the plane alternating rotational movement of the comb-like elements, a mutually skew arrangement of the innermost fingers is maintained.

This way, two fingers of respective comb-like elements cannot hit or touch each other, or in any case excessively approach to each other, in which case they would form a sort of scissors that can cut or in any case damage the branches and the twigs of the plant, which happens, on the contrary, when using the prior art devices.

In particular, the other fingers, considered as pairs of corresponding fingers that have the same rank with respect to the distance from the longitudinal axis, are mounted skew as well, in order to keep a mutual predetermined distance when the comb-like elements are at about the closed configuration.

Such particular orientation of the innermost fingers and, more in general, of the corresponding fingers, which have the same rank with respect to the distance from the longitudinal axis, can be obtained by the features indicated hereinafter.

Preferably, the innermost fingers are arranged at respective predetermined angles, in particular said angles are equal to each other, with respect to the longitudinal axis. In particular, the corresponding fingers, which have the same rank with respect to the distance from the axis, are arranged at predetermined respective angles with respect to the longitudinal axis.

For instance, the bases can have a substantially parallelepiped shape and a face arranged perpendicular to the direction of the longitudinal axis, and the innermost fingers or the corresponding fingers are arranged at respective angles with respect to this face. For instance, the fingers may have a cylindrical shape and/or a parallelepiped shape, and can be arranged within respective holes, which provide housings for said fingers and have a corresponding shape, said holes made on said face according to said respective angles.

In an exemplary embodiment, the innermost fingers, in particular also the other corresponding fingers, which have the same rank with respect to the distance from the axis, are arranged symmetrically with respect to the longitudinal axis of the device. This can be obtained, in particular, by providing couples of housings, i.e. of holes, for the fingers, in the first and in the second base, symmetrical with respect to the longitudinal axis of the device.

Advantageously, each array of fingers comprises five fingers. Due to the short distance between the comb-like elements, as allowed by the connection with a single pin located at the axis of the transmission stem, it is possible to arrange a larger number of shaking elements, i.e. one finger more than the conventional four of each comb-like element, for a given length of the bases, thus obtaining a device capable of a more powerful shaking movement with a same radial extension and, accordingly, with a same size.

Advantageously, the directions according to which the elongated base members of the comb-like elements extend form a convex angle, as viewed along the longitudinal axis. This way, a device is obtained which can shake a greater volume of the plant, with a same size and mass of the components of the comb-like element, i.e. a same size and mass of the bases and of the fingers, and which is therefore more efficient than the prior art devices, in particular, if the bases of the two comb-like elements are mounted skew and symmetrically oriented with respect to each other.

Preferably, the elongated support is an elongated box-like support, and the actuation unit and at least one part of the transmission mechanism are arranged inside the elongated box-like support.

Preferably, the actuation unit comprises an electric motor, in particular a battery-supplied DC motor, and the device comprises a housing for one or more batteries, said housing configured to form an electric connection between the battery/batteries and the electric motor.

In an advantageous exemplary embodiment, the electric motor is cantilevered to a reduction gear of the actuation unit. This simplifies the maintenance of the transmission mechanism and of the actuation unit because, upon opening the box-like support, i.e. the box, which preferably comprises two halves connected by bolts or other conventional connection means, the whole actuation-transmission unit, i.e. a group comprising a motor, a reduction gear and the transmission, remains in its own position in one half of the box. This also simplifies the replacement of the motor itself. In particular, the motor is supported by a flange configured to be received in a tubular box, preferably by means of an O-ring.

Advantageously, the motor is arranged with an own axis parallel to the transmission axis. The substantially axial arrangement of the motor, with respect to the transmission stem, allows to use a box that is less thick than in the prior art devices. Moreover, the arrangement of the mass of the motor in a position substantially aligned with the masses of the reduction gear, of the transmission mechanism and of the comb-like elements, and not in a lateral position, and therefore the substantial absence of offset masses, allows an operator to easily manipulate the device.

Preferably, the actuation unit comprises a hermetic, i.e. fluid-tight reduction gear. This way, the lubrication of the reduction gear is prevented from loosing possible lubricant and from receiving such foreign material as powder and dirt in general, moreover the device does not require additional lubricant after shipment.

The enlarged end portion of the elongated support can comprise a couple of extensions at an angle with respect to the longitudinal axis, in particular two "V"-shaped diverging extensions, and the second end is arranged protruding from the enlarged end portion between the diverging extensions.

### Brief description of the drawings

The invention will be now shown with the description of some exemplary embodiments, exemplifying but not limitative, with reference to the attached drawings, in which:
- Figs. 1 and 2 are elevation side views of a device for harvesting olives according to the prior art, in a closed configuration and in an open configuration, respectively, of the comb-like elements;
- Fig. 3 is an elevation side view of a portable device according to the invention, in a closed configuration of the comb-like elements;
- Fig. 4 is an elevation front view of a device according to an exemplary embodiment of the invention, with the comb-like elements arranged at an angle with respect to each other;
- Fig. 5 is an elevation side view of a device according to an exemplary embodiment of the invention, in which the motor is cantilevered to the reduction gear and has its own rotation axis oriented along the longitudinal axis of the elongated support, in a closed configuration of the comb-like elements;
- Fig. 6 is a partial elevation side view of a device according to an exemplary embodiment of the invention that is similar to the device of Fig. 5 and has the reduction gear connected to the box-like support and the motor cantilevered to the reduction gear and fluid-tightly connected with it;
- Fig. 7 is a longitudinal sectional view of a device according to an exemplary embodiment of the invention, with the innermost fingers of the comb-like elements in a skew arrangement with respect to each other;
- Fig. 8 diagrammatically shows two comb-like elements with the innermost fingers, when mounted, at an angle with respect to a line perpendicular to the upper face of the bases;
- Fig. 9 is a top plan view of the bases of the left comb-like element and of the right comb-like element of a device as shown in Fig. 4;
- Fig. 10 is an elevation side view of the base of the left comb-like element of Fig. 9;
- Fig. 11 is a cross sectional view of the left comb-like element of Fig. 9;
- Fig. 12 is an exploded view of the device of Fig. 6.

### Description of exemplary embodiments the invention

With reference to Fig. 3, a portable device 2 is described for harvesting small fruits from plants according to the invention. Device 2 has an elongated support 20 that extends along a longitudinal axis 24, configured to be held by an operator at a handle portion 22 that is, in particular, close to one end of elongated support 20. Opposite to handle portion 22, elongated support 20 has an enlarged end portion 21 that, in an exemplary embodiment, comprises two extensions or arms 23 at an angle with respect to longitudinal axis 24, in this case two "V"-arranged arms. In particular, arms 23 can extend along respective coplanar axes 25.

Device 2 also comprises two left and right comb-like elements 30',30" that are movable with respect to elongated support 20. More in detail, two comb-like elements 30',30" are arranged to carry out a vibratory movement with respect to support 20, in order to shake the branches and the twigs of a plant and, therefore, to cause the fruit pieces attached to the branches and to the twigs to fall. More in particular, each comb-like element 30',30" comprises a plurality of fingers 36, i.e. elongated stiff or relatively flexible elements, which are connected, preferably by a fixed joint, with an elongated base member 31',31" of each comb-like element 30',30", in order to form an array 35, i.e. all fingers 36 are oriented to a same side with respect to respective elongated base member 31',31". Preferably, fingers 36 extend from a same front face 39 of elongated base member 31',31".

In the exemplary embodiment, as depicted, five fingers 36 are shown for each comb-like element 30',30". Fingers 36 may have lengths different from one another, for instance they can comprise groups of fingers of the same length. Moreover, fingers 36 can be arranged at different angles with respect to a line perpendicular to the base direction 37 of the respective elongated base member, as shown more in detail in Fig. 4, which causes the effects and has the advantages described hereinafter.

Each comb-like element 30',30" is pivotally connected to elongated support 20 in such a way that comb-like elements 30',30" are located on the side, indicated as the front side, opposite to the side where support 20 extends, indicated as the rear part side. More in detail, each comb-like element 30',30" is pivotally connected to a respective left or right extension 23',23" of enlarged end portion 21 of support 20, through a first hinge portion 32. Preferably, as shown in the figure, hinge 32 is made on base 31',31", for example in a middle position of base 31',31", such as a substantially central position. Each first hinge portion 32 defines a rotation axis 38, shown for example in Fig. 4, for respective left or right base 31',31", i.e. for respective left or right comb-like element 30',30". Rotation axes 38 can be variously oriented with respect to base 31',31" and to longitudinal axis 24 of support 20.

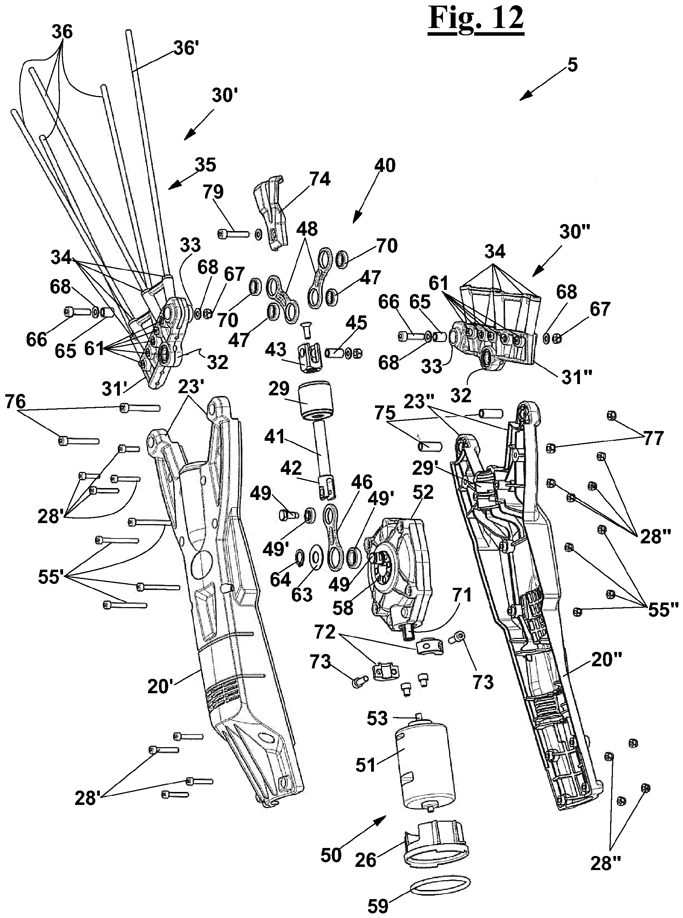

For instance, the connection between each extension 23',23" and first hinge portion 32 of respective comb-like element 30',30" can comprise a spacer 75, as shown in Fig. 12 in the same way as in a device 5 according to the invention, described hereinafter. The connection is perfected by a screw 76 and a nut 77, in a way obvious for a person skilled in the art.

Device 2 also comprises an actuation unit 50 for causing comb-like elements 30',30" to move. Actuation unit 50 is mounted to elongated support 20, and can comprise a motor 51, preferably an electric, battery-supplied motor, and possibly a reduction gear 52. Both motor 51 and reduction gear 52 can be of a well-known type, and the respective outlet and inlet shafts 53, 71 can be conventionally connected to each other by a two-halves joint member 72 comprising locking screws 73.

A transmission mechanism 40 is provided to transfer the movement from actuation unit 50 to comb-like elements 30',30", thus transforming the rotational circular movement of motor 51 into the alternating rotational movement of each comb-like element 30',30" about respective first hinge portion 32. Transmission mechanism 40 comprises a transmission stem 41 arranged to reciprocate along a transmission axis 44, which is aligned with longitudinal axis 24 of elongated support 20. To this purpose, as shown in Figs. 5 and 12, a guide means 29 is provided such as a bush 29 that provides a housing for the translation of transmission stem 41.

In this exemplary embodiment, motor 51 has an output shaft oriented according to an axis 54 orthogonal to transmission axis 44. Possible and preferred mutual alternative orientation can be used, as described hereinafter.

Transmission stem 41 has a rear end portion 42 connected to a power outlet of actuation unit 50, and a front end portion 43 arranged at enlarged end portion 21 of support 20 and pivotally connected to first ends of two left and right links 48. Each link 48 has a second end, opposite to its own first end, connected to a second hinge portion 33 of a respective comb-like element 30',30", preferably made on base 31',31".

Second hinge portion 33 is located at a different position, with respect to first hinge portion 32. More in detail, the second hinge portion is arranged at a lever distance L from first hinge portion, measured along base direction 37 of base 31',31".

According to the invention, transmission stem 41 is connected to the first end of each left and right links 48 by a pin 45 that is arranged on transmission axis 44 of stem 41, at front portion 43 thereof. In particular, a single pin 45 is arranged within a hole of front portion 43 of transmission stem 41, and within a housing at the first end of each left and right links 48. Preferably, as shown in Fig. 12 in the same way as in device 5, a bearing 47 is provided between pin 45 and a circular housing, at the first end of each link 48, the bearing having its outer ring integral to a housing at the first end of link 48 and its inner ring integral to pin 45.

The connection between each link 48 and second hinge portion 33 of a respective comb-like element 30',30" can comprise a spacer 65. Preferably, as shown in Fig. 12, a bearing 70 is provided between spacer 65 and a circular housing at the second end of each link 48, said bearing having its outer ring integral to a housing at the second end of links 48 and its inner ring integral to respective spacer 65. The connection on the side of the first end portion of each link 48 is perfected by a screw 66, a nut 67 and two washers 68, in a way obvious for a person skilled in the art.

Fig. 4 shows a device 3 according to an exemplary embodiment of the invention, in an elevation front view, along longitudinal axis 24 of support 20 (Fig. 3). In device 3, base directions 37',37" of elongated base members 31',31" form a convex angle α, as viewed along longitudinal axis 24. In an exemplary embodiment, as depicted, bases 31',31" have a linear profile, even if at least in part curvilinear elongated base members are possible. In device 3, rotation axes 38 of each base 31',31",with respect to support 20, are at an angle with respect to each other, i.e. they form a predetermined angle α.

In Fig. 5, a device 4 is shown, according to an exemplary embodiment of the invention, in which actuation unit 50 comprises a motor 51 that is cantilevered to reduction gear 52.

In device 4, reduction gear 52 can be of a fluid-tight type, i.e. sealed, with a lubricating fluid that has been arranged inside at the time of manufacturing, and that doesn't need any further lubrication fluid. In this case, motor 51 is advantageously arranged on the casing of reduction gear 52 by a sealing ring 56. This arrangement is possible also in device 3 of Fig. 4.

In device 4, transmission mechanism 40 comprises a connecting rod 46 whose big head is eccentrically connected with an output shaft 57 of reduction gear 52, for example through a wheel 58 fitted on output shaft 57. At the opposite side, the small end of connecting rod 46 is pivotally connected to rear end portion or head 42 of transmission stem 41. For instance, as shown in Fig. 12 in the same way as in device 5 according to the invention, the connection of the big end and of the small end of connecting rod 46 with output shaft 57 and with head 42 of the stem can be made by means of respective pins 49 and bearings 49' that have their outer rings integral to the small end or to the big end of connecting rod 46, and their inner rings integral to respective pins 49'. The connection on the side of the big end of connecting rod 46 is perfected by a cup spring 63 and a resilient ring 64, in a way obvious for a person skilled in the art.

Support 20 comprises a slide seat 29 for transmission stem 41, in order to force transmission stem 41 to perform an alternated translational movement along longitudinal axis 24 of support 20. This can be made, for instance, by a guide bush 29 fixedly arranged within a housing 29' inside casing 20, which serves as a box-like support, as shown in Fig. 12. This way, the rotational circular movement of output shaft 57 of reduction gear 52 is transformed first into an alternated translational movement of transmission stem 41, through connecting rod 46, and then into a rotational alternated movement of comb-like elements 30',30", within a predetermined angle, through left and right links 48.

In device 4, motor 51 is arranged with its own axis 54 parallel to transmission axis 44, i.e. oriented in the same way as longitudinal axis 24 of box 20. A similar arrangement of motor 51 is provided in device 5 of Fig. 6. Moreover, in device 5, elongated support 20 has a box-like shape with a base portion 20' and a cover portion 20", removable from base portion 20', said portions connected to each other with such a conventional means as screws 28' and nuts 28" (Fig. 12). Actuation unit 50, which comprises motor 51 and reduction gear 52, is arranged within box 20, in particular it is fixed to base portion 20'. In particular, reduction gear 52 is connected to base portion 20', for example by a fixed joint or by such a conventional connection means as screws 55' and nuts 55" (Fig. 12). This way, by removing cover portion or upper casing 20" from base portion or lower casing 20', reduction gear 52 and motor 51, which are mounted to the latter, remain fixed to base portion 20'. Connecting rod 46 and a portion of transmission stem 41 are arranged within elongated box-like support 20 as well.

As shown in Fig. 12, reduction gear 52 has a thickness small enough for allowing a flat box-like support 20 to be used, which makes it easy to handle device 5.

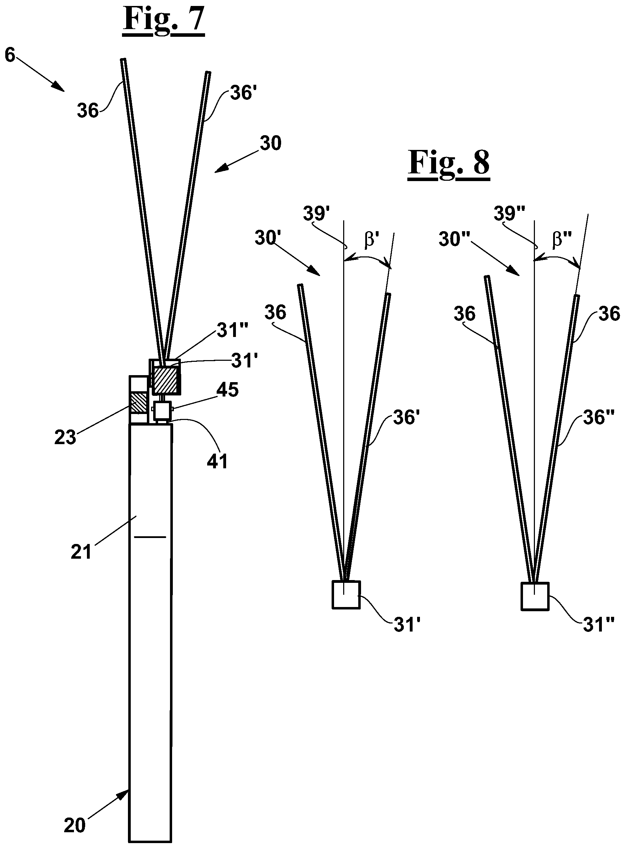

Fig. 7 shows a device 6, according to an exemplary embodiment of the invention, in a longitudinal sectional view taken along plane A-A of Fig. 5. However, the features described in connection with Fig. 7 are independent from the features of the device of Fig. 5, and can relate to any devices 2, 3 or 4 of Figs. 3-6. Fingers 36',36" belong to comb-like elements 30',30", respectively, of device 6, therefore they extend from respective bases 31',31". More in detail, fingers 36',36" are the innermost fingers, i.e. they are the fingers most close to longitudinal axis 24 (Fig. 5) of right comb-like element 30' and of left comb-like element 30", respectively.

Innermost fingers 36',36" are advantageously mounted to comb-like elements 30',30", respectively, in such a way that they are skew to each other, i.e. they are neither coplanar nor parallel to each other.

The skew arrangement of innermost fingers 36',36" is maintained during the movement of comb-like elements 30',30" and is maintained, in particular, when comb-like elements 30',30" are at about the closed configuration, as shown in Fig. 3, i.e. to the minimum mutual angular distance configuration. This way, about the closed configuration of comb-like elements 30',30", innermost fingers 36',36" are at a mutual distance longer than a minimum safety distance, which can be predetermined at the time of mounting innermost fingers 36',36" on respective bases 31',31", in this exemplary embodiment.

This way, innermost fingers 36',36" cannot hit or touch each other, or in any case they cannot excessively approach to each other, whenever the device is about its own closed configuration, which would form a sort of scissors that would damage or even cut the branches and the twigs of the plant, and/or would cause device 6 to get caught among the branches and the twigs of the plant.

In Fig. 7, only innermost fingers 36',36" are shown, however, in a modification of this exemplary embodiment, also the corresponding fingers that have the same rank with respect to the distance from longitudinal axis 24 are mounted skew as well, even in this case in order to avoid the above described "scissors effect", when the device is about the closed configuration. This is useful, in particular, in devices equipped with particularly long fingers and/or in which the fingers are particularly close to one another.

The skew arrangement of innermost fingers 36',36" or, more in general, of corresponding fingers 36, can be obtained as shown in Fig. 8, i.e. by arranging innermost fingers 36',36", as well as pairs of corresponding fingers 36, as defined before, at predetermined respective angles with respect to longitudinal axis 24 of the device. In particular, fingers 36',36" or also corresponding fingers 36 are at respective angles β',β", as viewed along base direction 37',37". In the case shown, angles β', β" are substantially equal to each other. In a modification, this angle can be measured with respect to a line 39',39" perpendicular to front face 39 of respective bases 31',31";

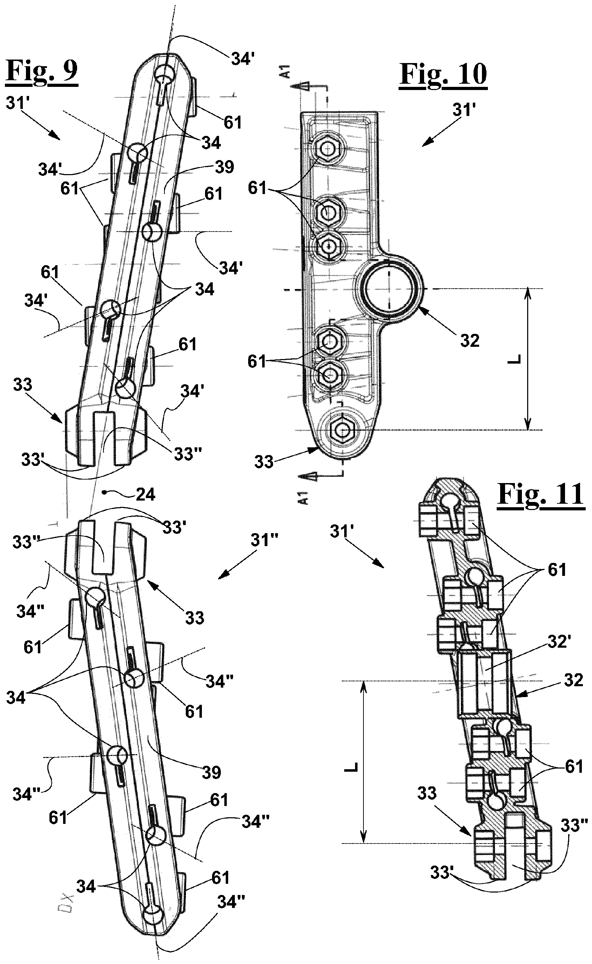

Fig. 9 shows left and right bases 31',31" of left comb-like 30' and of right comb-like 30", respectively, in a view as in Fig. 5, according to a particular exemplary embodiment, in which housing holes 34 are made on front faces 39 of bases 31',31", for instance, cylindrical holes 34. Holes 34 of the left base and of the right base have respective directions 34',34", such that the fingers are mounted at angles β',β", as described above. As it can be observed, holes 34 of left base 31' are symmetrical to corresponding holes 34 of right base 31", with respect to longitudinal axis 24, however they are not parallel to each other due to the angle of directions 34',34". As in the case of corresponding fingers, corresponding holes are those that have, in two comb-like elements 30',30", the same rank with respect to the distance from longitudinal axis 24. In particular, the above-described symmetry condition can be limited to the innermost holes, i.e. for the couple of holes, made on respective bases 31',31", that are most close to longitudinal axis 24.

Bases 31',31" of Fig. 9 are also configured so that respective base directions 37',37" form a convex angle α. More in detail, in order to obtain this arrangement, each base 31',31" comprises a main part that extends along respective base direction 37',37", and a portion, comprising second hinge portion 33, which form an angle equal to the half of said convex angle α with the main part of respective base 31',31".

In this exemplary embodiment, second hinge portion 33 is made of two halves 33', in other words it comprises two tail portions 33' parallel to each other that define a housing 33" for respective links 48 connecting transmission of stem 41.

In Figs. 10 and 11, left base 31' is shown in a top plan view (Fig. 10), i.e. as viewed along said longitudinal axis 24 from the finger side, with the fingers removed, and in a longitudinal cross section (Fig. 11) taken along line A1-A1 of fig. 10. First hinge portion 32 comprises a hole 32' having different diameters, in particular hole 32' has outmost portions having a larger diameter and an innermost portion, within base 31', having a smaller diameter. Finally, holes 61 are shown for locking screws 62 that serves for fixing fingers 36, 36', 36" within respective holes 34.

As shown in Fig. 12, a protective shield 74 can be provided for stem 41, connected to box-like support 20 by a screw 79.

Moreover, motor 51 can be housed within a cup-shaped flange 26 that is fixed to support 20, a resilient ring 59 being preferably located between motor 51 and box-like support 20.

In a particular exemplary embodiment, not shown, the elongated base members of the two comb-like elements extend according to base directions skew to each other, and are arranged symmetrically with respect to longitudinal axis 24, so that fingers 36 of one of comb-like elements 30',30" are maintained skew with respect to fingers 36 of the other comb-like element 30', 30".

It is to be understood that the phraseology or terminology employed herein is for the purpose of description and not of limitation.

## Claims

1. A portable device (2,3,4,5,6) for harvesting small fruits from plants by causing a vibration or a shaking movement, comprising:
- an elongated support (20) configured to be grasped by an operator and having a longitudinal axis (24) and an enlarged end portion (21) that is widened with respect to the longitudinal axis (24);
- two comb-like elements (30',30"), each comprising:
- respective elongated base members (31',31") extending along respective base directions (37',37");
- respective arrays (35) of fingers (36) that extend from said respective elongated base members (31',31") on a same side, opposite to said elongated support (20), with respect to said respective elongated base members (31',31"),
wherein each of said two comb-like elements (30',30") has a first hinge portion (32) that is pivotally connected to said enlarged end portion (21), and a second hinge portion (33) that is arranged at a lever distance (L) from said first hinge portion (32);
- an actuation unit (50) configured for actuating an alternating rotational movement of said comb-like elements (30',30") with respect to said enlarged end portion (21) about said respective first hinge portions (32), wherein said actuation unit (50) is mounted to said elongated support (20);
- a movement transmission mechanism (40) between said actuation unit (50) and said two comb-like elements (30',30"), comprising two links (48), each pivotally connected to said second hinge portion (33) of a respective comb-like element (30',30") of said two comb-like elements,
**characterized in that said** transmission mechanism (40) also comprises:
- a transmission stem (41) comprising:
- a first end portion (42) connected to said actuation unit (50);
- a second end portion (43), opposite to said first end portion (42), connected to a pin (45) arranged at said second end portion (43) of said transmission stem (41);
said transmission stem (41) connected to a first end of each of said two links (48) by said pin (45),
so that said second end portion (43), through both said links (48), causes said comb-like elements (30',30") to rotate about said first hinge portion (32) alternately between an open configuration and a closed configuration,
- a slide seat (29) for said transmission stem (41), arranged to force said transmission stem (41) to perform an alternated translational movement along said longitudinal axis (24) of said elongated support (20),
said transmission stem (41) configured for reciprocating along a transmission axis (44) which is aligned with said longitudinal axis (24), **and in that** said pin (45), which is integral to said transmission stem (41) for both said two links (48), is arranged on said transmission axis (44) of said transmission stem (41).

2. A device (6) according to claim 1, wherein a pair of innermost fingers (36',36") of said fingers (36), each arranged at a distance from said longitudinal axis (24) shorter than any distinct finger (36) of a respective comb-like element (30',30"), are mounted skew to each other, so as to have a mutual distance longer than a predetermined minimum distance when said comb-like elements are at about said closed configuration.

3. A device (2,3,4) according to claim 2, wherein a plurality of pairs of corresponding fingers (36',36") that have the same rank with respect to the distance from said longitudinal axis (24) are mounted skew as well.

4. A device (2,3,4) according to claim 2, wherein said innermost fingers (36',36") are arranged at predetermined respective angles (β',β") with respect to the longitudinal axis (24).

5. A device (2,3,4) according to claim 4, wherein said corresponding fingers are arranged at predetermined respective angles with respect to the longitudinal axis (24).

6. A device (2,3,4) according to claim 3, wherein said innermost fingers (36',36") are arranged symmetrically with respect to the longitudinal axis (24).

7. A device (2,3,4) according to claim 6, wherein said corresponding fingers are arranged symmetrically with respect to the longitudinal axis (24).

8. A device (2,3,4) according to claim 1, wherein each of said arrays (35) comprises five fingers (36).

9. A device (3) according to claim 1, wherein said base directions (37',37") form a convex angle (α), as viewed along said longitudinal axis (24).

10. A device (5) according to claim 1, wherein said elongated support is an elongated box-like support (20), and said actuation unit (50) and at least one part of said transmission mechanism (40) are arranged inside said elongated box-like support (20).

11. A device according to claim 10, wherein said actuation unit (50) comprises an electric motor (51) cantilevered to a reduction gear (52) of said transmission mechanism (40).

12. A device according to claim 11, wherein said motor (51) is arranged with an own axis (54) parallel to the transmission axis (44).

13. A device (4) according to claim 1, wherein said transmission mechanism (40) comprises a sealed box housing in which a fluid-tight reduction gear (52) is arranged.

## Patentansprüche

1. Tragbare Vorrichtung (2, 3, 4, 5, 6) zum Ernten kleiner Früchte von Pflanzen durch Verursachen einer Vibration oder einer Schüttelbewegung, umfassend:
- einen länglichen Träger (20), der konfiguriert ist, um von einem Bediener ergriffen zu werden, und der eine Längsachse (24) und einen vergrößerten Endabschnitt (21) umfasst, der bezüglich der Längsachse (24) verbreitert ist;
- zwei kammartige Elemente (30', 30"), jeweils umfassend:
- jeweilige längliche Basiselemente (31', 31"), die sich entlang jeweiliger Basisrichtungen (37', 37") erstrecken;
- jeweilige Anordnungen (35) von Fingern (36), die sich von den jeweiligen länglichen Basiselementen (31', 31") auf einer selben Seite, gegenüber dem länglichen Träger (20), bezüglich der jeweiligen länglichen Basiselemente (31', 31") erstrecken, wobei jedes der zwei kammartigen Elemente (30', 30") einen ersten Gelenkabschnitt (32), der schwenkbar mit dem vergrößerten Endabschnitt (21) verbunden ist, und einen zweiten Gelenkabschnitt (33), der in einem Hebelabstand (L) vom ersten Gelenkabschnitt (32) angeordnet ist, aufweist;
- eine Betätigungseinheit (50), die konfiguriert ist, um eine abwechselnde Rotationsbewegung der kammartigen Elemente (30', 30") bezüglich des vergrößerten Endabschnitts (21) um die jeweiligen ersten Gelenkabschnitte (32) zu betätigen, wobei die Betätigungseinheit (50) am länglichen Träger (20) angebracht ist;
- einen Bewegungsübertragungsmechanismus (40) zwischen der Betätigungseinheit (50) und den zwei kammartigen Elementen (30', 30"), umfassend zwei Glieder (48), die jeweils mit dem zweiten Gelenkabschnitt (33) eines jeweiligen kammartigen Elements (30', 30") der zwei kammartigen Elemente schwenkbar verbunden ist, **dadurch gekennzeichnet, dass der** Übertragungsmechanismus (40) außerdem umfasst:
- einen Übertragungsschaft (41), umfassend:
- einen ersten Endabschnitt (42), der mit der Betätigungseinheit (50) verbunden ist;
- einen zweiten Endabschnitt (43), gegenüber dem ersten Endabschnitt (42), der mit einem Stift (45) verbunden ist, der am zweiten Endabschnitt (43) des Übertragungsschafts (41) angeordnet ist;
wobei der Übertragungsschaft (41) durch den Stift (45) mit einem ersten Ende jedes der zwei Glieder (48) verbunden ist, so dass der zweite Endabschnitt (43), durch beide Glieder (48) bewirkt, dass die kammartigen Elemente (30', 30") um den ersten Gelenkabschnitt (32) abwechselnd zwischen einer offenen Konfiguration und einer geschlossenen Konfiguration rotieren,
- einen Gleitsitz (29) für den Übertragungsschaft (41), der angeordnet ist, um den Übertragungsschaft (41) zu zwingen, eine abwechselnde Translationsbewegung entlang der Längsachse (24) des länglichen Trägers (20) auszuführen, wobei der Übertragungsschaft (41) zum Hin- und Herbewegen entlang einer Übertragungsachse (44), die auf die Längsachse (24) ausgerichtet ist, konfiguriert ist, **und dadurch, dass** der Stift (45), der einstückig mit dem Übertragungsschaft (41) für beide Glieder (48) ist, auf der Übertragungsachse (44) des Übertragungsschafts (41) angeordnet ist.

2. Vorrichtung (6) nach Anspruch 1, wobei ein Paar innerster Finger (36', 36") der Finger (36), die jeweils in einem Abstand von der Längsachse (24) angeordnet sind, der kürzer als jeder einzelne Finger (36) eines jeweiligen kammartigen Elements (30', 30") ist, schräg zueinander angeordnet ist, um einen gegenseitigen Abstand aufzuweisen, der länger als ein vorgegebener Mindestabstand ist, wenn die kammartigen Elemente um die geschlossene Konfiguration sind.

3. Vorrichtung (2, 3, 4) nach Anspruch 2, wobei eine Vielzahl von Paaren entsprechender Finger (36', 36"), die dieselbe Rangordnung bezüglich des Abstands von der Längsachse (24) aufweisen, ebenfalls schräg angeordnet sind.

4. Vorrichtung (2, 3, 4) nach Anspruch 2, wobei die innersten Finger (36', 36") in vorgegebenen jeweiligen Winkeln (β',β") bezüglich der Längsachse (24) angeordnet sind.

5. Vorrichtung (2, 3, 4) nach Anspruch 4, wobei die entsprechenden Finger in vorgegebenen jeweiligen Winkeln bezüglich der Längsachse (24) angeordnet sind.

6. Vorrichtung (2, 3, 4) nach Anspruch 3, wobei die innersten Finger (36', 36") symmetrisch bezüglich der Längsachse (24) angeordnet sind.

7. Vorrichtung (2, 3, 4) nach Anspruch 6, wobei die entsprechenden Finger symmetrisch bezüglich der Längsachse (24) angeordnet sind.

8. Vorrichtung (2, 3, 4) nach Anspruch 1, wobei jede der Anordnungen (35) fünf Finger (36) umfasst.

9. Vorrichtung (3) nach Anspruch 1, wobei die Basisrichtungen (37', 37") entlang der Längsachse (24) gesehen einen konvexen Winkel (a) formen.

10. Vorrichtung (5) nach Anspruch 1, wobei der längliche Träger ein länglicher kastenartiger Träger (20) ist und die Betätigungseinheit (50) und mindestens ein Teil des Übertragungsmechanismus (40) im länglichen kastenartigen Träger (20) angeordnet sind.

11. Vorrichtung nach Anspruch 10, wobei die Betätigungseinheit (50) einen Elektromotor (51) umfasst, der auf einem Untersetzungszahnrad (52) des Übertragungsmechanismus (40) freitragend angeordnet ist.

12. Vorrichtung nach Anspruch 11, wobei der Motor (51) mit einer eigenen Achse (54) parallel zur Übertragungsachse (44) angeordnet ist.

13. Vorrichtung (4) nach Anspruch 1, wobei der Übertragungsmechanismus (40) ein abgedichtetes Kastengehäuse umfasst, in dem ein fluiddichtes Untersetzungszahnrad (52) angeordnet ist.

## Revendications

1. Dispositif portable (2, 3, 4, 5, 6) destiné à récolter des petits fruits de plantes en provoquant un mouvement de vibration ou de secousse, comprenant :
- un support allongé (20) conçu pour être saisi par un opérateur et possédant un axe longitudinal (24) et une partie d'extrémité élargie (21) qui est élargie par rapport à l'axe longitudinal (24) ;
- deux éléments en forme de peigne (30', 30") comprenant chacun :
- des éléments base allongés (31', 31") respectifs s'étendant le long des directions de base (37', 37") respectives ;
- des ensembles respectifs (35) de doigts (36) qui s'étendent à partir desdits éléments de base allongés (31', 31") respectifs sur un même côté, opposé audit support allongé (20), par rapport auxdits éléments de base allongés (31', 31") respectifs, chacun desdits deux éléments en forme de peigne (30', 30") comportant une première partie charnière (32) qui est raccordée de manière pivotante à ladite partie d'extrémité élargie (21), et une seconde partie charnière (33) qui est agencée à une distance de levier (L) de ladite première partie charnière (32) ;
- une unité d'actionnement (50) conçue pour actionner un mouvement de rotation alterné desdits éléments en forme de peigne (30', 30") par rapport à ladite partie d'extrémité élargie (21) autour desdites premières parties charnières (32) respectives, ladite unité d'actionnement (50) étant montée sur ledit support allongé (20) ;
- un mécanisme de transmission de mouvement (40) entre ladite unité d'actionnement (50) et lesdits deux éléments en forme de peigne (30', 30"), comprenant deux biellettes (48), chacune raccordée de manière pivotante à ladite seconde partie charnière (33) d'un élément en forme de peigne (30', 30") respectif desdits deux éléments en forme de peigne,
**caractérisé en ce que ledit** mécanisme de transmission (40) comprend également :
- une tige de transmission (41) comprenant :
- une première partie d'extrémité (42) raccordée à ladite unité d'actionnement (50) ;
- une seconde partie d'extrémité (43), opposée à ladite première partie d'extrémité (42), raccordée à une broche (45) agencée au niveau de ladite seconde partie d'extrémité (43) de ladite tige de transmission (41) ;
ladite tige de transmission (41) étant raccordée à une première extrémité de chacune desdites deux biellettes (48) par ladite broche (45), afin que ladite seconde partie d'extrémité (43), par l'intermédiaire desdites deux biellettes (48), amène lesdits éléments en forme de peigne (30', 30") à tourner autour de ladite première partie charnière (32) alternativement entre une configuration ouverte et une configuration fermée,
- un siège coulissant (29) pour ladite tige de transmission (41), agencé pour forcer ladite tige de transmission (41) à effectuer un mouvement de translation alterné le long dudit axe longitudinal (24) dudit support allongé (20),
ladite tige de transmission (41) étant conçue pour effectuer un mouvement de va-et-vient le long d'un axe de transmission (44) qui est aligné avec ledit axe longitudinal (24), et **en ce que** ladite broche (45), qui fait partie intégrante de ladite tige de transmission (41) pour lesdites deux biellettes (48), est agencée sur ledit axe de transmission (44) de ladite tige de transmission (41).

2. Dispositif (6) selon la revendication 1, une paire de doigts les plus à l'intérieur (36', 36") desdits doigts (36), chacun agencé à une distance à partir dudit axe longitudinal (24) plus courte qu'un quelconque doigt distinct (36) d'un élément en forme de peigne (30', 30") respectif étant montés obliquement l'un par rapport à l'autre de façon à avoir une distance mutuelle plus longue qu'une distance minimale prédéfinie lorsque lesdits éléments en forme de peigne se trouvent environ à ladite configuration fermée.

3. Dispositif (2, 3, 4) selon la revendication 2, une pluralité de paires de doigts correspondants (36', 36") qui possèdent le même rang par rapport à la distance par rapport audit axe longitudinal (24) étant également montés obliquement.

4. Dispositif (2, 3, 4) selon la revendication 2, lesdits doigts les plus à l'intérieur (36', 36") étant agencés selon des angles respectifs prédéfinis (β', β") par rapport à l'axe longitudinal (24).

5. Dispositif (2, 3, 4) selon la revendication 4, lesdits doigts correspondants étant agencés selon des angles respectifs prédéfinis par rapport à l'axe longitudinal (24).

6. Dispositif (2, 3, 4) selon la revendication 3, lesdits doigts les plus à l'intérieur (36', 36") étant agencés symétriquement par rapport à l'axe longitudinal (24).

7. Dispositif (2, 3, 4) selon la revendication 6, lesdits doigts correspondants étant agencés symétriquement par rapport à l'axe longitudinal (24).

8. Dispositif (2, 3, 4) selon la revendication 1, chacun desdits ensembles (35) comprenant cinq doigts (36).

9. Dispositif (3) selon la revendication 1, lesdites directions de base (37', 37") formant un angle convexe (a), tel que vu le long dudit axe longitudinal (24).

10. Dispositif (5) selon la revendication 1, ledit support allongé étant un support allongé de type boîtier (20), et ladite unité d'actionnement (50) et au moins une partie dudit mécanisme de transmission (40) étant agencées à l'intérieur dudit support allongé de type boîtier (20).

11. Dispositif selon la revendication 10, ladite unité d'actionnement (50) comprenant un moteur électrique (51) en porte à faux par rapport à un réducteur (52) dudit mécanisme de transmission (40).

12. Dispositif selon la revendication 11, ledit moteur (51) étant agencé avec un axe propre (54) parallèle à l'axe de transmission (44).

13. Dispositif (4) selon la revendication 1, ledit mécanisme de transmission (40) comprenant un logement de boîtier scellé dans lequel un réducteur étanche aux fluides (52) est agencé.
